## Europäisches Patentamt
## European Patent Office
## Office européen des brevets

(19)

(11) Veröffentlichungsnummer: **0 109 488**

**A1**

(12)

# EUROPÄISCHE PATENTANMELDUNG

(21) Anmeldenummer: **83108164.1**

(22) Anmeldetag: **18.08.83**

(51) Int. Cl.³: **G 11 B 23/04**

(30) Priorität: **18.11.82 DE 3242603**

(43) Veröffentlichungstag der Anmeldung:
**30.05.84 Patentblatt 84/22**

(84) Benannte Vertragsstaaten:     –
**AT BE CH DE FR GB IT LI**

(71) Anmelder: **GRUNDIG E.M.V. Elektro-Mechanische Versuchsanstalt Max Grundig & Co. KG.**
**Kurgartenstrasse 37**
**D-8510 Fürth(DE)**

(72) Erfinder: **Zöllner, Rainer**
**Birkenweg 4**
**D-8501 Dietenhofen(DE)**

(54) **Mini-Kassette.**

(57) Es wird eine Mini-Kassette (1) für Videogeräte beschrieben, bei der die Bandwickelspulen (3, 4) mit einer Sperreinrichtung versehen sind. Erst beim Einlegen der Kassette in das Gerät wird die Sperreinrichtung, die im wesentlichen aus einem verzahnten Spulenflansch (11, 12) der Wickelspule und einer in die Verzahnung einfallenden Sperrklinke (13) besteht, aufgehoben. Die Sperrklinke und ein mit dieser zusammenwirkender, dem Gerät zugeordneter Stift (10) ist derart ausgebildet, daß beim Herausnehmen der Kassette aus dem Gerät wenigstens eine Wickelspule in die das Magnetband spannende Richtung gedreht wird.

FIG.2

— 1 —

# M I N I  -  K A S S E T T E

## BESCHREIBUNG

Die Erfindung betrifft eine Mini-Kassette für Videogeräte in Form eines im wesentlichen quaderförmigen
Körpers mit zwei darin drehbar gelagerten Wickelspulen
für das Magnetband und einer an einer schmalen Längsfläche vorgesehenen Öffnung mit teilweise zurückgesetzter Gehäusewand zur freiliegenden Magnetbandführung,
wobei bedarfsweise die Kassette aus zwei verriegelbaren
im wesentlichen geschlossenen Halbteilen besteht, die
zur Veränderung des Wickelspulenabstandes sowie zur
Vergrößerung der freiliegenden Magnetbandlänge verschiebbar oder verschwenkbar gelagert sind und daß der
Spulenflansch der Wickelspule wenigstens einseitig Verzahnungen aufweist.

Es sind Magnetbandkassetten bekannt, bei denen die
Bandwickelspulen mit einem bestimmten Abstand nebeneinander in einem Kassettengehäuse angeordnet und die
Wickelspulen von außen über geräteseitig angeordnete
Antriebsmittel antreibbar sind. Bei Kassetten für die Verwendung in Videogeräten ist es vorteilhaft, wenn an einer schmalen Längsfläche auf beiden Seiten Öffnungen zur Durchführung des Magnetbandes vorgesehen sind und zwischen den Öffnungen die Gehäusewand zur freiliegenden Magnetbandführung zurückgesetzt ist. Das freiliegende Magnetband ist durch eine Abdeckung geschützt, die erst nach dem Einlegen einer Kassette in ein Videogerät automatisch seitlich weggeschwenkt wird. Das Magnetband liegt dann für den Zugriff geräteseitig vorhandener Ausziehstifte (nicht gezeichnet) frei. Die Ausziehstifte führen das Magnetband im Inneren des Gerätes an entsprechende Abtastelemente, wie z. B. Bild-Kopftrommel, Ton-Aufnahme- und -Wiedergabeköpfe u. a. heran. Um die Kassette aus dem Gerät herausnehmen zu können, muß zuerst das Magnetband vollständig in die Kassette zurückgeführt werden. Erst dann kann die seitlich abgeschwenkte Abdeckung wieder über das freiliegende Magnetband der Kassette zurückgeklappt werden, um das Magnetband zu schützen. Damit verhindert wird, daß sich die Wickelspulen in der Kassette verdrehen, sofern die Kassette nicht im Gerät eingelegt ist und sich hierbei das freiliegende Magnetband verheddert, weisen die Spulen eine lösbare Verriegelung auf. Bekannt ist eine Spulenverriegelung, die aus einer lösbaren Zahnsperrung besteht.

Nachteilig ist hierbei, daß das Magnetband nach Rückführung in die Kassette mit den bisher bekannten Ausführungen von Zahnsperrungen nicht ausreichend gespannt ist und so Schwierigkeiten bei der weiteren Handhabung der Kassette bestehen.

Der Erfindung liegt daher die Aufgabe zugrunde, diesen Nachteil zu beseitigen und eine Zahnsperrung für Magnetbandspulen in Videokassetten zu finden, die nach Rückführung des Magnetbandes aus dem Gerät oder aus einem Kassettenadapter zurück in die Kassette sichergestellt, daß das in der Kassette freiliegende Magnetband ständig gestrafft ist.

Die Lösung dieser Aufgabe erfolgt erfindungsgemäß durch die im kennzeichnenden Teil des Anspruchs 1 angegebenen Maßnahmen.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigt:

Fig. 1     eine perspektivisch dargestellte Mini-Kassette für Videogeräte mit Abdeckung,

Fig. 2     eine Draufsicht auf die Kassette mit teilweise aufgebrochen dargestelltem Gehäuse,

Fig. 3    eine vergrößerte Teildarstellung
der Kassette im Schnitt,

Fig. 4    eine Teildarstellung der Kassette
ähnlich der Fig. 3 und

Fig. 5    eine Darstellung eines Einzelteils
aus der Fig. 4.

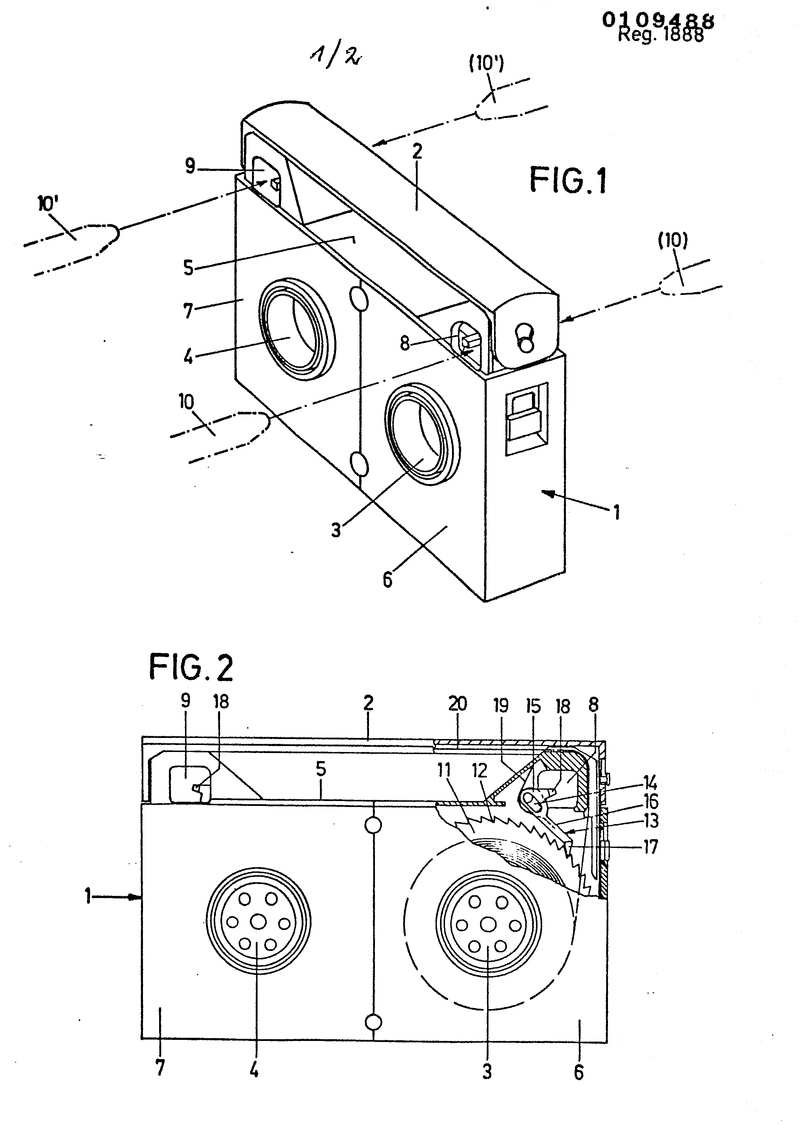

Die Figur 1 zeigt eine perspektivisch dargestellte Mini-Kassette 1 mit Abdeckung 2 für Videogeräte. Die Kassette 1 weist die Form eines im wesentlichen quaderförmigen Körpers auf mit zwei darin drehbar gelagerten Magnetband-Wickelspulen 3 und 4. An einer schmalen Längsfläche weist die Kassette seitlich zwei Öffnungen für das Herausführen des Magnetbandes aus der Kassette auf. Zwischen den Öffnungen ist die Gehäusewand 5 der Kassette zur freiliegenden Magnetbandführung zurückgesetzt. Das freiliegende Magnetband ist nach der dargestellten Zeichnung durch die Abdeckung 2 abgedeckt. Die dargestellte Kassette besteht aus zwei im wesentlichen geschlossenen Halbteilen 6 und 7, die zur Veränderung des Wickelspulenabstandes auseinander-gezogen werden können. Beidseitig im äußeren Kassettenbereich an der Stelle, an der das Magnetband aus der Kassette herausgeführt wird, sind durchgehende Öffnungen 8, 9 in das Kassettengehäuse eingebracht. In die Öffnungen tauchen geräteseitig vorhandene Stifte 10 und 10' ein und entriegeln beim Einlegen der Kassette in das Gerät die in der Kassette gegen unerwünschtes Verdrehen gesicherten Wickelspulen 3, 4.

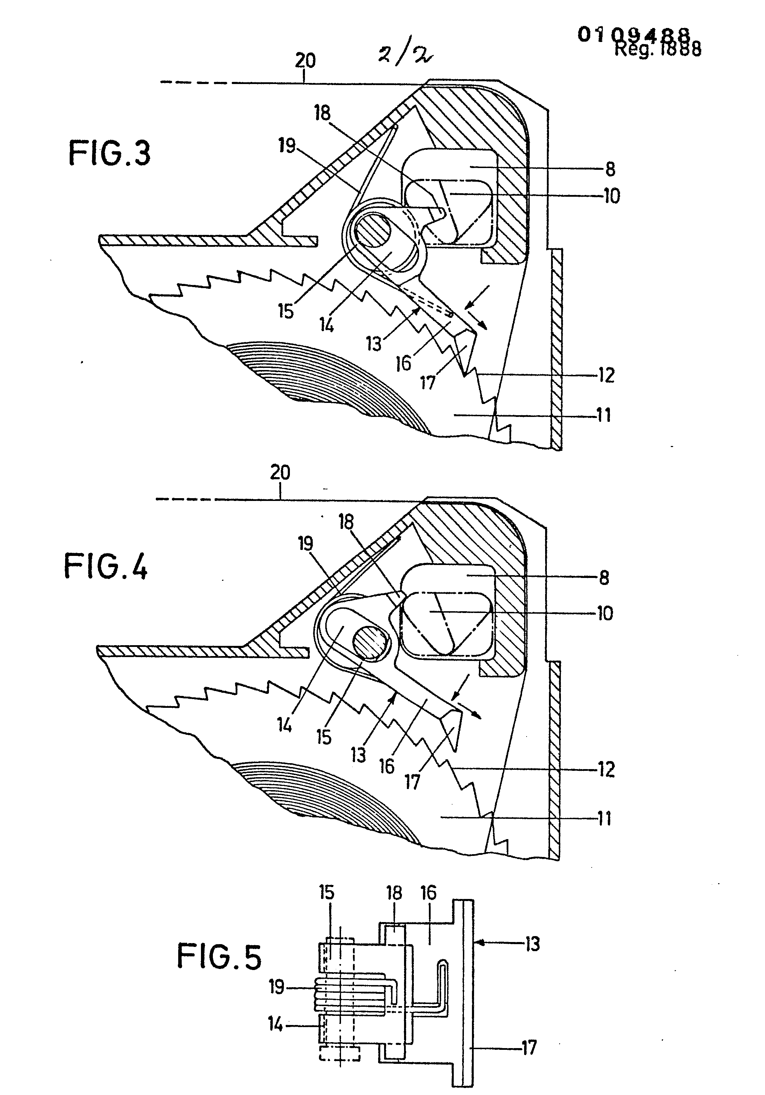

Aus der Figur 2 ist eine Mini-Kassette 1 in der Draufsicht mit teilweise aufgebrochenem Gehäuse dargestellt,
wobei die Verriegelung der Wickelspulen 3, 4 an einem
Ausführungsbeispiel aufgezeigt ist. Im Inneren der aufgebrochen gezeichneten Kassette ist ein der Wickelspule 3 zugeordneter Spulenflansch 11, der eine Verzahnung 12 aufweist, zu erkennen. In die Verzahnung 12 des
Spulenflansches ist eine unter Federspannung stehende
Sperrklinke 13 eingefallen. Die Sperrklinke besteht aus
einem einstückig aus Kunststoff gefertigten Winkelteil,
das aus einem ein Langloch 14 aufweisenden Lagerauge 15
besteht, wobei in Verlängerung zum Langloch das Lagerauge einen Schenkel 16 mit am Ende angeordnetem Sperrhaken 17besitzt und winklig zum Lagerauge ein Betätigungsteil 18 aufweist. Eine Schenkelfeder 19, bei der ein
Schenkel an der Innenwand der Kassette und der andere
Schenkel an der Sperrklinke anliegt, hält die Sperrklinke 13 ständig in zwei Bewegungsrichtungen unter
Federspannung. Die eine Bewegungsrichtung drückt die
Sperrklinke in die Verzahnung des Spulenflansches der
Wickelspule, die andere bewegt die Sperrklinke längs des
Verzahnungsumfanges des Wickelspulenflansches (s. Bewegungspfeil in Fig. 3 und 4).

In den Figuren 3 und 4 ist in vergrößerter Darstellung
die Funktion der Sperrklinke ersichtlich. Nach Fig. 3 wird der Spulenflansch 11 durch die Sperrklinke 13 blockiert, d. h. die Kassette befindet sich nicht im Gerät oder in einem Kassettenadapter. Strichpunktiert ist der Stift 10 in die Figur eingezeichnet, in welcher Lage er das Betätigungsteil 18 der Sperrklinke erfassen wird. Wird nun die Kassette in das Gerät eingelegt, so taucht der Spulenantrieb in die Wickelspulenkörper ein und gleichzeitig dringt der Stift 10 und 10' (s. Fig.4) in die jeweilige Öffnung 7, 8 der Kassette, erfaßt die Klinke über deren Betätigungsteil 18 und hebt sie aus der Verzahnung des Spulenflansches. Die Wickelspulen sind somit frei, und das Magnetband kann aus der Kassette herausgezogen werden. Bei Entnahme der Kassette aus dem Gerät entfernt sich der Stift 10 bzw. 10' aus der Kassettenöffnung 8 und 9, wobei das Betätigungsteil 18 der Sperrklinke entlang des keilförmig ausgebildeten Stiftes gleitet. Hierbei fällt zuerst der Sperrhaken 17 der Sperrklinke in die Verzahnung 12 des Spulenflansches 11 ein. Anschließend wird die Sperrklinke über das Langloch 14 im Lagerauge 15 durch das Einwirken der Schenkelfeder 19 verschwenkt und bewegt so die Wickelspule über den zugeordneten Spulenflansch. Das freiliegende Magnetband 20 wird gespannt und ein Verheddern des Magnetbandes an der Abdeckung 2 oder an Geräteteilen oder beim Einlegen in einen Kassettenadapter wird vermieden.

Die Figur 5 zeigt die Sperrklinke 13 als Einzelteil mit eingelegter Schenkelfeder 19. Die Schenkelfeder wird durch das geteilte Lagerauge 15 der Sperrklinke fixiert.

# M I N I  -  K A S S E T T E

PATENTANSPRÜCHE

1. Mini-Kassette für Videogeräte in Form eines im wesentlichen quaderförmigen Körpers mit zwei darin drehbar gelagerten Wickelspulen für das Magnetband und einer an einer schmalen Längsfläche vorgesehenen Öffnung mit teilweise zurückgesetzter Gehäusewand zur freiliegenden Magnetbandführung, wobei bedarfsweise die Kassette aus zwei verriegelbaren im wesentlichen geschlossenen Halbteilen besteht, die zur Veränderung des Wickelspulenabstandes sowie zur Vergrößerung der freiliegenden Magnetbandlänge verschiebbar oder verschwenkbar gelagert sind und daß der Spulenflansch der Wickelspule wenigstens einseitig Verzahnungen aufweist, in die beim Herausnehmen der Kassette aus einem Gerät oder einem Kassettenadapter auf jeder Spulenseite eine Sperrklinke einfällt, d a d u r c h   g e k e n n z e i c h n e t, daß die Sperrklinke (13) drehbar und längs des Verzahnungsumfanges des Wickelspulenflansches (11) verschiebbar in der Kassette (1) angeordnet ist und durch entsprechende Formgebung eines Stiftes (10, 10'), der zur Entriegelung der Sperrklinke von der Geräteseite her in die Kassette eintaucht, die Sperrklinke beim Herausnehmen der Kassette aus dem Gerät derart bewegt wird, daß die Wickelspule (3, 4) in die das freiliegende Magnetband spannende Richtung gedreht wird.

2. Mini-Kassette nach Anspruch 1, d a d u r c h  g e k e n n z e i c h n e t , daß die Sperrklinke (13) einstückig aus Kunststoff gefertigt und über ein mit einem Langloch (14) versehenem Lagerauge (15) dreh- und verschiebbar in der Kassette (1) gelagert ist.

3. Mini-Kassette nach den Ansprüchen 1 und 2, d a d u r c h  g e k e n n z e i c h n e t , daß die Sperrklinke (13) aus einem Winkelteil besteht, das in Verlängerung zum Langloch des Lagerauges einen Schenkel (16) mit am Ende angeordnetem Sperrhaken (17) besitzt und ein winklig zum Lagerauge angeordnetes Betätigungsteil (18) aufweist.

4. Mini-Kassette nach den Ansprüchen 1 bis 3, d a d u r c h  g e k e n n z e i c h n e t , daß der Sperrklinke eine Schenkelfeder (19) zugeordnet ist, bei der sich ein Schenkel an der Innenwand der Kassette abstützt und der andere Schenkel an der Sperrklinke (13) derart anliegt, daß diese sowohl im Langloch des Lagerauges unter Federspannung verschiebbar ist als auch der Sperrhaken der Sperrklinke unter Federspannung in den verzahnten Wickelspulenflansch eingreift.

5. Mini-Kassette nach den Ansprüchen 1 bis 4, d a d u r c h   g e k e n n z e i c h n e t ,   daß der Stift (10) zur Betätigung der Sperrklinke (13) keilförmig ausgebildet ist.

6. Mini-Kassette nach den Ansprüchen 1 bis 5, d a d u r c h   g e k e n n z e i c h n e t ,   daß in der Kassette zwei Öffnungen (8, 9) zum Eintauchen des für die Betätigung der Sperrklinken erforderlichen Stifte (10, 10') vorgesehen sind.

7. Mini-Kassette nach Anspruch 6, d a d u r c h g e k e n n z e i c h n e t ,   daß die Öffnungen im äußeren Kassettenbereich auf der freiligenden Magnetbandführungsseite angeordnet und von beiden Kassetten-Flachseiten zugänglich sind.

8. Mini-Kassette nach den Ansprüchen 1 bis 7, d a d u r c h   g e k e n n z e i c h n e t ,   daß im mittleren Bereich der Kassette nur eine Öffnung zur gleichzeitigen Betätigung beider Sperrklinken über einen in die Kassette eintauchenden Stift vorgesehen ist.

9. Mini-Kassette nach den Ansprüchen 1 bis 8, d a d u r c h   g e k e n n z e i c h n e t ,   daß nur eine Sperrklinke die zugeordnete Wickelspule in die das freiliegende Magnetband spannende Richtung bewegt.

1/2

**FIG.1**

**FIG.2**

0109488
Reg. 1888

FIG.3

FIG.4

FIG.5

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A-2 044 733 (PHILIPS)<br><br>* Seite 2, Zeile 121 - Seite 3, Zeile 32; Seite 3, Zeile 45 - Seite 4, Zeile 68; Seite 4, Zeile 89 - Seite 5, Zeile 24; Figuren * | 1-5,8, 9 | G 11 B 23/04 |
| A | IBM TECHNICAL DISCLOSURE BULLETIN, Band 9, Nr. 10, März 1967, Seite 1397, New York, US R.B. JOHNSON et al.: "Small cartridge for videotext" * Seite 1397, Figuren * | 1 | |
| A | EP-A-0 045 083 (HITACHI MAXELL) * Seite 14, Zeile 5 - Seite 20, Zeile 1; Figuren * | 1-6 | |
| A | FR-A-2 013 052 (CARTRIDGE TELEVISION) * Seite 12, Zeile 13 - Seite 13, Zeile 3; Figuren 4-6 * | 1 | **RECHERCHIERTE SACHGEBIETE (Int. Cl. ³)**<br><br>G 11 B |
| A | GB-A-2 015 477 (SONY) | 1-4,7 | |
| A | FR-A-2 437 045 (MATSUSHITA) | 1 | |
| A | US-A-3 059 871 (S. LOEWE) | 1,5,6 | |
| A | DE-C- 862 060 (LOEWE OPTA)<br><br>--- -/- | 1 | |

Der vorliegende Recherchenbericht wurde für alle Patentansprüche erstellt.

| Recherchenort | Abschlußdatum der Recherche | Prüfer |
|---|---|---|
| DEN HAAG | 07-02-1984 | DECLAT M.G. |

0109488

Nummer der Anmeldung

EP  83 10 8164

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,A | EP-A-0 077 876  (GRUNDIG) | 1 | |

-----

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 07-02-1984 | DECLAT M.G. |

EPA Form 1503 03 82